# EUROPEAN PATENT APPLICATION

(11) **EP 4 180 788 A1**
(43) Date of publication of application: **17.05.2023**
(21) Application number: 22197174.0
(22) Date of filing: 22.09.2022
(51) Int. Cl.: G01L 9/00, G01L 19/00, G01L 19/04, G01L 19/14

(54) **ELECTRONIC PRESSURE SENSOR**

(30) Priority: 15.11.2021 IT 202100028937
(71) Applicant: Brimind S.r.l., 24060 Bolgare (Bergamo) (IT)
(72) Inventor: LEO, Leonardo Claudio, 25065 Lumezzane (Brescia) (IT)
(74) Representative: Petruzziello, Aldo

(57) **Abstract**

Electronic pressure sensor comprising a body (20) connectable on one side to a source of fluid and housing on the opposite side a mechanical support (30) for a ceramic cell (40) with pressure-sensitive element, and an electrical connector element (50) coupled to said pressure-sensitive element (41), wherein said ceramic cell (40) comprises a lower thin plate or membrane (41) constituting said pressure-sensitive element, turned towards said source of fluid, and a thicker upper plate (42), wherein said ceramic cell (40) is tightly attached to the support (30) on the side of the upper plate (42) such as to leave the lower face of the ceramic cell (40) with the pressure-sensitive membrane (41) completely free from sealing means.

## Description

The present invention relates to an electronic pressure sensor, and possibly a temperature sensor, usable for any type of fluid: gas or liquid.

An electronic pressure sensor comprises, in its essential parts, an external body, normally in metal, with a threaded fitting for connection to the source of fluid to be measured, in which are contained a support, normally in plastic or metal, for a ceramic cell carrying the pressure-sensitive part, and an electrical connector from which the measured data can be taken. The pressure-sensitive part is normally made up of a membrane consisting of a lower plate of minimal thickness of said ceramic cell, with the possibility of fluctuating as the pressure of the fluid changes.

In such known pressure sensors, the fluid tightness is guaranteed by applying between the metal or plastic body and the ceramic cell carrying the pressure-sensitive element a suitably sized gasket or an O-ring, as schematically shown in the accompanying Figures la and 1b, where the metal body is denoted by reference numeral 1, the plastic or metal mechanical support by reference numeral 2, the ceramic cell with the pressure-sensitive element by 3 and the O-ring by 4.

According to this embodiment, the O-ring 4 goes to seal against both the metal containment body 1 and/or the plastic or metal support and against the ceramic cell 3, with respect to the fluid that impacts the ceramic cell with the sensitive membrane from below.

However, such a solution has the following disadvantages:
- the sizing of the O-ring or gasket sealing system must not interfere with the sensitive part so that relatively large dimensions are required, resulting in applied force values that increase exponentially as the surface area and pressure increase;
- the seal of the gasket or O-ring is ensured by axial deformation/compression of the same, with consequent permanent deformation of the gasket and therefore possible cause of loss of seal over time due to natural ageing of the elastomer;
- finally, a "pump" effect of the entire system can be seen as the pressure present and/or applied varies, and the dimensional expansions as the temperature of the various materials/components present varies become very influential.

In order to avoid the disadvantages due to the sealing gasket, the European patent application EP 3270133A1 proposes gluing of the ceramic cell with the sensitive membrane to the relative support in plastic or in metal. Gluing takes place over a peripheral area leaving a central circular area free of glue to allow the membrane to bend.

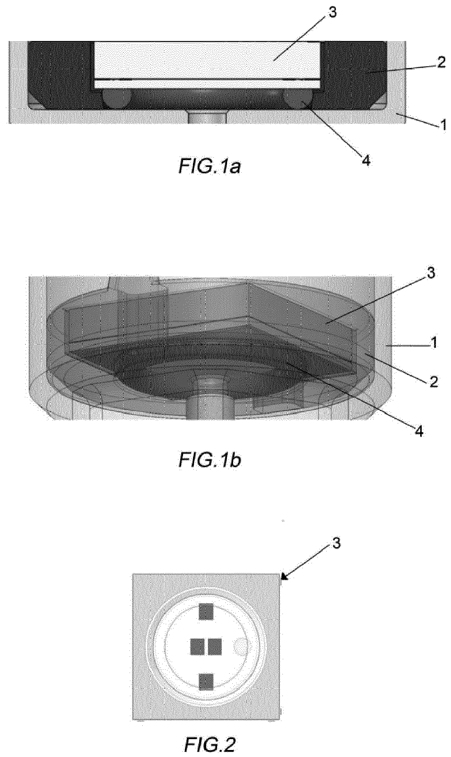

The accompanying Figure 2 shows schematically in a plan view from above the ceramic cell 3 in which the surface of application of the epoxy glue is shown in grey, while the central clear circular area represents the area free from glue that allows bending of the membrane on which are screen-printed four resistors of a Wheatstone bridge arranged in the configuration shown in transparency in the drawing. The deformation in extension or compression of the resistors integral with the membrane allows the responses of the bridge to variations in pressure of the fluid to be obtained.

As can be seen from the drawing, the arrangement of the resistors of the bridge is such that two of them are arranged centrally and close to each other and two others are arranged radially outwards, the two pairs of resistors being positioned on lines perpendicular to each other.

The glue must guarantee a perfect seal and adhesion to the support body of the ceramic cell, whether made of plastic or metal, and at the same time allow the bending of the membrane.

In the case of applications with pressures of approximately 50 bar and working temperatures from -40 °C to +140 °C, the choice of glue is of the epoxy type with a transition temperature higher than 150 °C. Consequently, once cured, the glue becomes extremely rigid. Having to size and position the resistors in the clear area free from glue that makes the membrane rigid, it was found that the resistors positioned externally and further away from the centre are strongly influenced and become unstable due to the proximity to the presence of glue and this causes strong rigidity of the membrane itself.

The result is a non-linear behaviour of the signal in output of the bridge, both with the varying of the pressure and with the varying of the temperature. Moreover, the precision tolerance becomes very high at P=K (constant) in the various temperature points, varying considerably as the temperature varies up or down, without a linear behaviour and even less so repetitive.

In order to seek to overcome this disadvantage, the European patent application EP21174739.9 proposes to glue the ceramic cell with the sensitive membrane to the relative plastic or metal support along the perimeter of a square, and to arrange the Wheatstone bridge resistors oriented along a diagonal of the square.

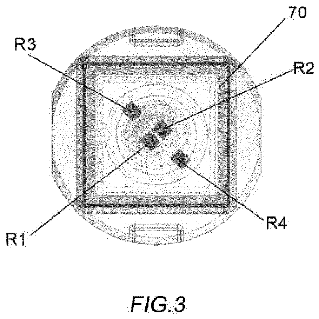

The accompanying Figure 3 shows schematically in plan view from above the ceramic cell in which the surface of application of the epoxy glue is shown in grey and denoted by reference numeral 70, while the clear central area, square in shape, represents the area without glue, where two pairs of resistors are arranged: R1, R2 and R3, R4, the latter being oriented along a diagonal of the square. With such an arrangement of resistors and glue, the resistors R3, R4 are at a greater distance from the area that has become rigid and constrained due to the presence of the structural glue 70, thus reducing the problems previously disclosed.

However, the Applicant has found that even such a structure does not completely eliminate the influence on the behaviour of the resistors of the stiffening caused by the gluing of the ceramic cell to the relative support.

CN 214308873 U describes, in particular in the embodiment of Figures 19-21, a pressure and temperature sensor in which a ceramic substrate is attached to the sensor body, from the lower side bearing the pressure-sensitive membrane, by means of at least one sealing means 18. Such a configuration does not differ structurally from those previously disclosed. The pressure of the fluid, which acts on the side of the substrate where the sealing means are provided, tends to favour mechanical detachment of the sealing system, with consequent leaks of the fluid.

It is therefore the object of the invention to seek to completely eliminate the aforementioned disadvantages.

More particularly, one object of the invention is to provide an electronic pressure sensor with a system for attaching and sealing of the ceramic cell to the relative support, which eliminates any influence on the behaviour of the bridge resistors screen-printed on the sensitive membrane.

Another object of the invention is to provide such a pressure sensor in which the sealing system is not negatively affected by the pressure of the fluid to be measured, but rather takes advantage of this pressure.

A further object of the invention is to provide such a pressure sensor integrated with an NTC temperature sensor.

Yet another object of the invention is to provide a pressure sensor with such a sealing system that is simple and inexpensive to manufacture and reliable over time. These objects are achieved by the electronic pressure sensor with improved sealing system according to the invention having the features of the appended independent claim 1.

Advantageous embodiments of the invention are disclosed in the dependent claims.

Substantially, the electronic pressure sensor according to the invention comprises a body connectable on one side to a source of fluid and housing on the opposite side a mechanical support for a ceramic cell with a pressure-sensitive element, and an electrical connector element coupled to said pressure-sensitive element, wherein said ceramic cell comprises a thin lower plate or membrane constituting said pressure-sensitive element, turned towards said source of fluid, and a thicker upper plate, wherein said ceramic cell is attached tightly to the support on the side of the upper plate such as to leave completely free from sealing means the lower face of the ceramic cell with the pressure-sensitive membrane.

Further features of the invention will be made clearer by the following detailed description, referred to an embodiment thereof purely by way of non-limiting example, illustrated in the accompanying drawings, in which:
Figures 1a and 1b are partial schematic views, in section and perspective from below respectively, of an electronic pressure sensor with gasket or O-ring sealing system according to the prior art;
Figure 2 is a schematic plan view from above, of a system of sealing through gluing of an electronic pressure sensor according to the prior art, with the Wheatstone bridge resistors shown in transparency;
Figure 3 is a schematic plan view from above of a further system of sealing through gluing of an electronic pressure sensor according to the prior art, with the Wheatstone bridge resistors shown in transparency and arranged along a diagonal of a square;
Figure 4 is an axonometric blown-up view of an electronic pressure and temperature sensor according to the invention;
Figure 5 is a blown-up view like Figure 4, with the various components of the sensor shown in section;
Figure 6 is an overall sectional view of the sensor of Figure 5.

The electronic sensor which is the subject of the present invention is of the same type as the pressure sensor described in European patent application EP 3270133A1 mentioned above, to which reference may be made for the technical features of the same, integrated with a temperature sensor. An example structure of the sensor will be briefly described here below.

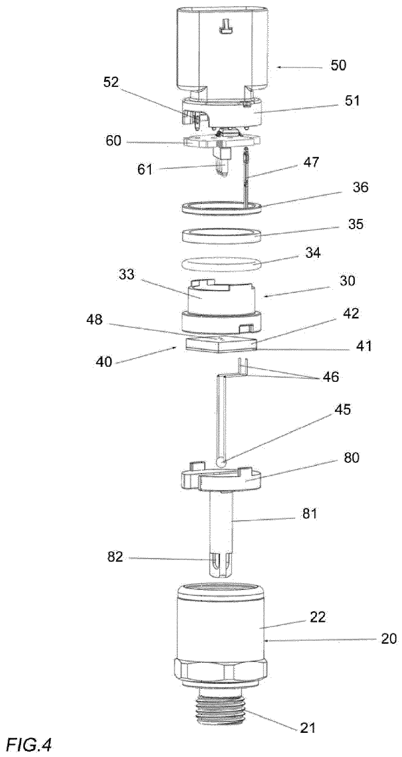

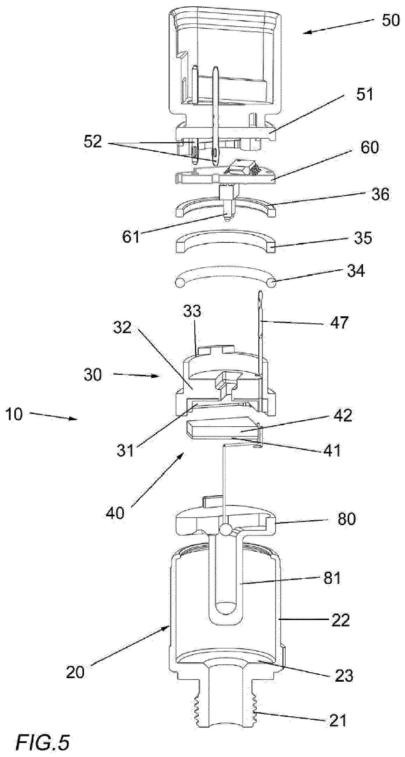

Referring to Figures 4 to 6, an electronic pressure sensor according to the invention has been denoted as a whole by reference numeral 10.

It comprises a normally metal body 20, having on one side, the lower one with reference to the drawings, a threaded connection 21 for connection to the source of fluid whose pressure is to be measured and, on the opposite side, a socket housing 22 suitable for containing the components of the sensor.

More particularly, the body 20 houses a mechanical support 30, generally in plastic material or also metal, provided with a seat or cavity 31 for the housing of a ceramic cell or plate 40 with pressure-sensitive element.

In the embodiment shown in the drawings, the ceramic cell 40, square in shape, is made up of two superimposed plates, a lower plate 41 of somewhat slim thickness and an upper plate 42 of greater thickness. The thin plate 41, which will also be referred to as membrane, is the pressure-sensitive element. On it, four resistors forming a Wheatstone bridge are normally positioned, whose change in resistance is indicative of the deformation of the membrane subjected to the pressure, which is then converted into an electrical quantity.

The four resistors, preferably screen-printed on the ceramic membrane 41, are housed in a cavity formed below the upper plate 42 so as to be able to undergo small displacements as a result of the deformation of the membrane when the pressure of the fluid changes, as illustrated more clearly in the patent application EP21174739.9 mentioned previously.

According to a feature of the present invention, the seat 31 of the support 30 is turned downwards, so as to accommodate the ceramic cell 40 on the side of the upper plate 42, leaving completely free from sealing means, such as glue or the like, the lower face of the ceramic cell 40 with the pressure-sensitive membrane 41.

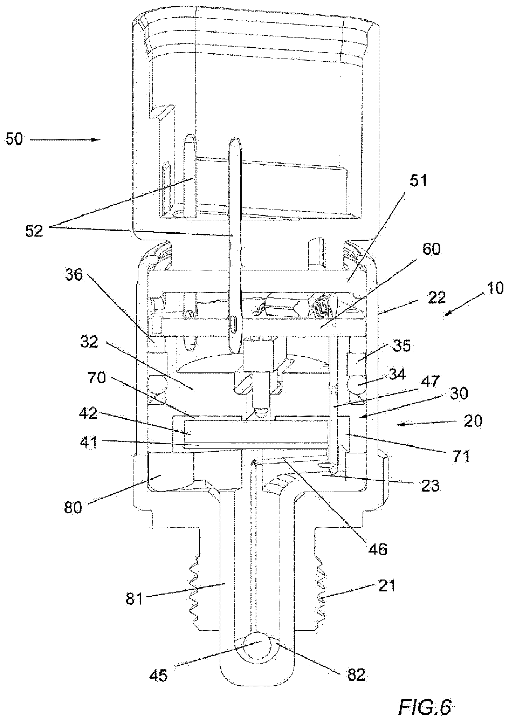

The ceramic cell 40 with the pressure-sensitive membrane 41 is glued to the mechanical support 30, such as to become a single piece with it, with a layer of structural glue 70 developing between the upper face of the ceramic cell 40 and the back wall 32 of the seat 31 of the mechanical support 30. Advantageously, the glue is also distributed, with a layer 71, along the lateral perimeter edge of the ceramic cell 40, as can be seen in Figure 6, so as to create a single block that ensures a perfect seal both mechanically and against leaks and seepages.

Optionally, as an alternative to the structural glue, a special gasket could be used to make the seal between the ceramic cell 40 and the relative support 30.

In the example shown, the support 30 carrying the ceramic cell 40 rests on a disc 80 housed on the back wall 23 of the socket housing 22 of the body 20. Centrally from the disc 80, a hollow stem 81 extends downwards, arranged inside the threaded fitting 21, protruding below therefrom. An NTC temperature sensor 45 is inserted in the hollow stem 81, which is arranged in proximity of the lower end of the same, where slots 82 are provided, through which the working fluid passes. The terminals 46 of the NTC sensor 45 extend into the hollow stem 81, protrude from the disc 80 and are arranged externally to the edge of the ceramic cell 40, where they are crimped to a pin 47 and embedded in the layer of glue 71.

Naturally, should the temperature sensor 45 not be present, the support 30 carrying the ceramic cell 40 would rest directly on the back wall 23 of the socket housing 22 of the body 20.

The support 30 extends upwards, beyond the abovementioned back wall 32 of the housing 31, with a cylindrical lateral wall 33, around which an O-ring 34, a back-up ring 35 and a closing washer 36 are arranged, in order from bottom to top, so as to make a perfect seal between the mechanical support 30 and the metal body 20 against possible fluid infiltrations.

Above the support 30 is a printed circuit board (PCB) 60, with which the pin 47 of the NTC sensor 45 comes into contact.

The printed circuit board 60 carries below spring contacts 61, which traverse the back wall 32 of the seat 31 and come into contact with corresponding pads 48 (schematically shown in Figure 4) provided on the upper face of the ceramic cell 40 in order to establish an electrical connection with the components of the sensitive membrane 41.

An electrical connector element 50 is then mounted above the printed circuit board 60, having a widened base 51, which is enclosed inside the socket housing 22 of the metal body 20.

The connector element 50 has pins 52 which come into contact with the printed circuit board 60, in order to establish an electrical connection with the sensitive membrane 41 and the NTC sensor 45, if present.

The connector element 50 can be connected to a complementary connector element for the detection, transfer and management of measurement data.

The advantages arising from the arrangement according to the invention are considerable:
- the stiffening is totally annulled of the sensitive membrane 41, which is left completely free from structural epoxy glue, or in any case from other sealing means;
- the sealing surface of the ceramic cell 40 is considerably increased, which becomes the almost total surface available, except for the area necessary, in this case of the contact pads or similar systems needed to carry the electrical signal to the printed circuit board 60 located in the upper part;
- in this configuration, the pressure of the fluid helps to guarantee the seal both mechanically and against possible leaks, since it does not act by favouring the detachment of the sealing system, but on the contrary compresses the sensitive part against the wall and the housing in which it is inserted.

Naturally, the materials of the components mentioned previously may differ from those indicated. Thus, for example, the pressure-sensitive membrane or plate can be made, as well as in ceramic, in glass composites, metal composites and the like.

Naturally, the invention is not limited to the particular embodiment previously described and illustrated in the accompanying drawings, but numerous detailed changes may be made thereto within the reach of the person skilled in the art, without thereby departing from the scope of the invention itself, as defined by the appended claims.

## Claims

1. Electronic pressure sensor comprising a body (20) connectable on one side to a source of fluid and housing on the opposite side a mechanical support (30) for a ceramic cell (40) with pressure-sensitive element, and an electrical connector element (50) coupled to said pressure-sensitive element (41), wherein said ceramic cell (40) comprises a lower thin plate or membrane (41) constituting said pressure-sensitive element, turned towards said source of fluid, and a thicker upper plate (42), **characterised in that** said ceramic cell (40) is tightly attached to the support (30) on the side of the upper plate (42) such as to leave the lower face of the ceramic cell (40) with the pressure-sensitive membrane (41) completely free from sealing means.

2. Electronic pressure sensor according to claim 1, **characterised in that** said ceramic cell (40) is housed in a seat or cavity (31) of the support (30), turned towards said source of fluid and having a back wall (32) against which the ceramic cell (40) is tightly fixed on the side of the upper plate (42).

3. Electronic pressure sensor according to claim 2, **characterised in that** said ceramic cell (40) is bonded to the mechanical support (30) with a layer of structural glue (70) developing between the upper face of its upper plate (42) and said back wall (32) of the seat (31) of the mechanical support (30).

4. Electronic pressure sensor according to claim 3, **characterised in that** it further provides a layer of glue (71) along the lateral perimeter edge of said ceramic cell (40).

5. Electronic pressure sensor according to any one of the preceding claims, **characterised in that** said connector element (50) has pins (52) which come into contact with a printed circuit board (60), provided with contacts (61) for establishing an electrical connection with the sensitive membrane (41).

6. Electronic pressure sensor according to claim 5, **characterised in that** said contacts (61) are spring contacts which traverse said back wall (32) of the seat (31) of the mechanical support (30) and come into contact with corresponding pads (48) provided on the upper face of the ceramic cell (40).

7. Electronic pressure sensor according to any one of the preceding claims, **characterised in that** an NTC temperature sensor (45) is also placed in said body (20).

8. Electronic pressure sensor according to claim 7, **characterised in that** the terminals (46) of the NTC sensor (45) are connected to a pin (47) which comes into contact with said printed circuit board (60) to establish an electrical connection with said connector element (50).

9. Electronic pressure sensor according to any one of the preceding claims, **characterised in that** at least one O-ring (34) working radially, is arranged around said mechanical support (30), sealing against an inner wall of said body (20).

10. Electronic pressure sensor according to any one of the preceding claims, **characterised in that** said pressure-sensitive element (41) is made of ceramic, glass composites, metal composites and the like.
